# EUROPEAN PATENT SPECIFICATION

(11) **EP 2 080 641 B1**
(45) Date of publication and mention of the grant of the patent: **09.11.2011**
(21) Application number: 07807746.8
(22) Date of filing: 21.09.2007
(51) Int. Cl.: B60C 9/20, B60C 9/00, B60C 9/22

(54) **PNEUMATIC RADIAL TIRE**
RADIALLUFTREIFEN
BANDAGE RADIAL PNEUMATIQUE

(30) Priority: 22.09.2006 JP 2006257236
(43) Date of publication of application: 22.07.2009
(73) Proprietor: The Yokohama Rubber Co., Ltd., Tokyo 105-8685 (JP)
(72) Inventor: UEDA, Yoshio, c/o The Yokohama Rubber Co., Ltd., Hiratsuka-shi, Kanagawa 254-8601 (JP)
(74) Representative: HOFFMANN EITLE
(86) International application number: PCT/JP2007/068415
(87) International publication number: WO 2008/035771

(56) References cited:
- WO-A1-03/086782
- WO-A1-2005/021290
- WO-A1-2006/077978
- JP-A- 08 226 085
- JP-A- 08 302 577
- JP-A- 09 226 314
- JP-A- 10 157 412
- JP-A- 2000 142 025
- JP-A- 2000 226 782
- JP-A- 2001 334 811
- JP-A- 2004 306 636
- JP-A- 2004 306 637
- JP-A- 2005 022 455
- JP-A- 2005 041 409
- JP-A- 2006 137 315
- JP-A- 2006 248 345

## Description

### TECHNICAL FIELD

The present invention relates to a pneumatic radial tire. More specifically, the present invention relates to a pneumatic radial tire that has a belt cover layer constituted of a high Young's modulus organic fiber cord, and that is capable of achieving an excellent effect of reducing road noises which is obtained by the belt cover layer, without deteriorating the anti-separation performance of edges of a belt layer.

### BACKGROUND ART

The following approach has conventionally been taken in order to achieve a high durability of a pneumatic radial tire. Specifically, at least the edge portions of a belt layer are covered with a belt cover layer obtained by winding an organic fiber cord. The belt cover layer used herein has an effect of enhancing the rigidity of the shoulder portions of the tire. Accordingly, it has been known that the belt cover layer also has an effect of suppressing the road noises of an intermediate frequency ranging from 250 to 315 Hz.

In recent years, attention has been attracted to the fact that when a high Young's modulus cord constituted of a polyolefin ketone fiber or the like is used as the organic fiber cord of such belt cover layer, the above-described effect of suppressing the road noises of an intermediate frequency is further improved. In this respect, a large number of inventions using high Young's modulus organic fiber cord have now been proposed (see, for example, Patent Documents 1 and 2).

Although providing a significant effect of reducing the road noises, the use of a high Young's modulus organic fiber cord in a belt cover layer is likely to cause the following problem. Since such high Young's modulus organic fiber cord has a high rigidity, the coating rubber of the edge portions of the belt layer is greatly deformed by the action of squeezing the belt layer during the running of the tire. As a result, separation of belt cords occurs in the edge portions of the belt layer.

It is conceivable that the rubber between the edge portion of the belt layer and the belt cover layer be thickened in order to prevent such problem. However, employing such approach leads to an increase in the entire weight of the tire, and thus is not considered as a favorable solution.

On the other hand, if the use amount of the high Young's modulus organic fiber cord is reduced in order to lower the degree of deformation applied to the rubber, the rigidity of the belt cover layer is also reduced. Accordingly, a problem occurs in that the effect of reducing the road noises, which should have been achieved, is reduced.
Patent Document 1: Japanese patent application *Kokai* publication No. 2000-142025
Patent Document 2: Japanese patent application *Kokai* publication No. 2004-306636

### DISCLOSURE OF INVENTION

### PROBLEMS TO BE SOLVED BY THE INVENTION

An object of the present invention is to provide a pneumatic radial tire that has a belt cover layer constituted of a high Young's modulus organic fiber cord, and that is capable of achieving an excellent effect of reducing road noises which is obtained by the belt cover layer, without deteriorating the anti-separation performance of belt cords in edges of a belt layer.

### MEANS FOR SOLVING THE PROBLEMS

The pneumatic radial tire according to the present invention for achieving the above-described object has the following structure (1) :
(1) a pneumatic radial tire comprising: at least two belt layers each composed of a steel cord and disposed on an outer periphery of a carcass layer; and a belt cover layer obtained by winding an organic fiber cord in a tire circumferential direction and disposed to cover at least an edge portion of the belt layers, wherein each of the belt layers is composed of the steel cord with a (2+1) twist structure, and the belt cover layer is formed of a high Young's modulus organic fiber cord of 4.5 to 18.0 GPa between tensile loads of 10 N to 99 N.

In addition, the pneumatic radial tire according to the present invention may have any one of the following structures (2) to (7):
(2) the pneumatic radial tire according to the above structure (1), in which the high Young's modulus organic fiber cord is a cord made of any one of a polyethylene naphthalate fiber and a polyolefin ketone fiber;
(3) the pneumatic radial tire according to the above structure (1), in which the high Young's modulus organic fiber cord is a composite fiber cord made of at least two selected from the group consisting of a nylon 6 fiber, a nylon 66 fiber, a polyethylene terephthalate fiber, a polyethylene naphthalate fiber, a polyolefin ketone fiber, a polyvinyl alcohol fiber, an aramid fiber, and a rayon fiber;
(4) the pneumatic radial tire according to any one of the above structures (1) to (3), in which core wires of the steel cord with the (2+1) twist structure each are not twisted at all, or soft-twisted at a twist pitch of not less than 20 mm, and a sheath wire thereof is twisted at a twist pitch of 10 to 30 mm;
(5) the pneumatic radial tire according to the above structure (4), in which diameters of the core wires and the sheath wire are 0.1 to 0.4 mm;
(6) the pneumatic radial tire according to any one of the above structures (1) to (5), in which a length, in a tire width direction, of the belt cover layer protrudes from a corresponding edge position of a belt layer having a maximum width among the belt layers is not less than 3 mm but not more than 30 mm; and
(7) the pneumatic radial tire according to any one of the above structures (1) to (6), in which the belt cover layer is an edge cover, and in the tire width direction, the belt cover layer is located at a position displaced inward in the tire width direction for not less than 5 mm from an edge position of a belt layer having a minimum width among the belt layers.

### EFFECTS OF THE INVENTION

In the pneumatic radial tire according to the present invention, in a case where the belt cover layer is constituted of the high Young's modulus organic fiber cord, each of the belt layers is constituted of the steel cord having the (2+1) twist structure. This structure suppresses an occurrence of crack propagation of separation, due to the ruggedness of the cord surface in the belt layers. As a result, separation of belt cords in the edge portions of each belt layer is prevented, so that the durability can be maintained.

### BRIEF DESCRIPTION OF THE DRAWINGS

[Fig. 1] Fig. 1 is a schematic cross-sectional view taken in a tire meridian direction, and illustrating an example of an embodiment of a pneumatic radial tire according to the present invention.
[Fig. 2] Fig. 2 is a schematic enlarged view of a vicinity of an edge portion of belt layers, for illustrating various forms in each of which the vicinity of the edge portion of each belt layer is covered with a belt cover layer, in the pneumatic radial tire according to the present invention.

### EXPLANATION OF THE REFERENCE NUMERALS

- 1: TREAD PORTION
- 2: SIDEWALL PORTION
- 3: BEAD PORTION
- 4: CARCASS LAYER
- 5: BEAD CORE
- 6: BELT LAYER
- 7: BELT COVER LAYER COVERING EDGE PORTIONS OF BELT LAYER
- 8: FIRST BELT
- 9: SECOND BELT
- 10: CENTER IN TIRE WIDTH DIRECTION

### BEST MODE FOR CARRYING OUT THE INVENTION

Hereinafter, a pneumatic radial tire according to the present invention will be described in detail with reference to an embodiment shown in the drawings.

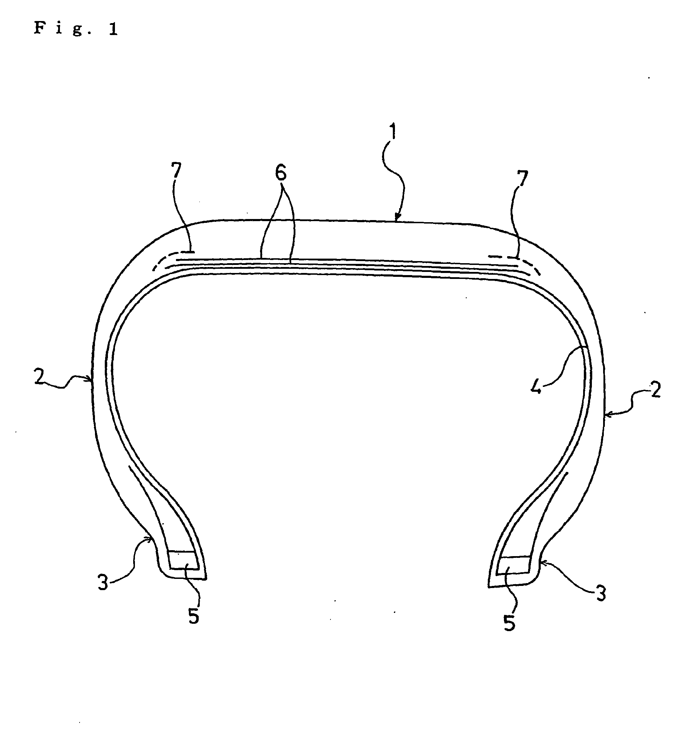

Fig. 1 is a schematic cross-sectional view taken in a tire meridian direction, and illustrating an example of the embodiment of the pneumatic radial tire according to the present invention.

Reference numeral 1 denotes a tread portion, 2 denotes sidewall portions, and 3 denotes bead portions. Inside the tire, a carcass layer 4 made of an organic fiber cord is provided to extend from the tread portion 1, through the left and right sidewall portions, to the bead portions 3. Each of the end portions of the carcass layer 4 is folded back around a bead core 5 from the inside to the outside of the tire. Two belt layers 6 each composed of a steel cord are provided on the outer periphery of the carcass layer 4. Moreover, belt cover layers 7 each formed by winding an organic fiber cord in the tire circumferential direction are provided to cover the respective edge portions of the belt layers 6.

In the above-described tire structure, the belt cover layers 7 are each composed of an organic fiber cord having a high Young's modulus of 4.5 to 18.0 GPa between the tensile loads of 10 N to 99 N, and a coating rubber. This high Young's modulus organic fiber cord is wound helically and substantially in parallel with the tire circumferential direction, so as to form the belt cover layer. What is meant by "substantially parallel" mentioned here is that the organic fiber cord is inclined to the tire circumferential direction at a very small angle ranging from 0° to 10°.

If the Young's modulus of the organic fiber cord is less than 4.5 GPa, the effect of suppressing the road noises of an intermediate frequency becomes poor, and does not provide a much difference from the conventional case of using nylon or the like for the belt cover layer. On the other hand, if the Young's modulus is larger than 18.0 GPa, the effect of preventing separation in the edges of each belt layer cannot be obtained, even in the case where the structure of the belt layers according to the present invention is employed.

In the present invention, the belt layers 6 are each composed of a steel cord with the (2+1) twist structure. The (2+1) twist structure is a structure in which a single steel sheath wire is wound around two steel core wires at a loose pitch. With such structure, the ruggedness of the cord surface can become significantly larger. Accordingly, since the ruggedness of the cord surface suppresses an occurrence of crack propagation of separation, separation of belt cords is unlikely to occur even when a severe shear force is exerted on the belt layers from the belt cover layer formed of the above-described high Young's modulus organic fiber cord.

In the present invention, in order for the belt layers each composed of the steel cord with the (2+1) twist structure to further efficiently produce the above-described effect, it is preferable that the two core wires in the steel cord with the (2+1) twist structure be substantially not twisted. What is meant by "substantially not twisted" is that the two core wires are not twisted at all or twisted at a twist pitch of not less than 20 mm. Twisting the two core wires at a twist pitch of not less than 20 mm, or not twisting these core wires at all makes it possible to increase in size the ruggedness formed by the single sheath wire wound around the outer periphery of the two core wires.

In addition, the single sheath wire is preferably wound around the two core wires at a twist pitch of 10 to 30 mm. If the twist pitch is less than 10 mm, the production efficiency of the steel cord is decreased; on the other hand, if the twist pitch is more than 30 mm, the ruggedness of the cord surface is decreased in size, so that the durability of the belt layers is reduced. Moreover, the wire diameters of the core wires and the sheath wire are preferably 0. 1 to 0.4 mm. If the diameter is less than 0.1 mm, the production efficiency of the steel cord is decreased.

Note that the diameters of the two core wires and the single sheath wire may be set as follows. The diameters of all of the three wires may be substantially the same, or some or all of them may be different from one another. Alternatively, the diameter of each of the (two) core wires and the diameter of the (single) sheath wire may be different from each other. In general, it is practical that all of the core wires and the sheath wire are made to have the same diameter.

In the present invention, as has already been described, the Young's modulus of the organic fiber cord needs to be in a range from 4.5 to 18.0 GPa between the tensile loads of 10 N to 99 N. It is preferable to employ one having Young's modulus in a range from 5.0 to 15.0 GPa.

The high Young's modulus organic fiber cord with Young's modulus of 4.5 to 18.0 GPa may be one constituted of a single fiber material, or a composite fiber cord formed of two or more different fiber materials combined with each other. When the high Young's modulus organic fiber cord is to be constituted of a single fiber material as in the former case, a polyethylene naphthalate (PEN) fiber or a polyolefin ketone (POK) fiber is the most preferable.

On the other hand, the organic fiber cord constituted of a composite fiber cord as in the latter case is preferably constituted of at least two selected from the group consisting of a nylon 6 fiber, a nylon 66 fiber, a polyethylene terephthalate fiber, a polyethylene naphthalate fiber, a polyolefin ketone fiber, a polyvinyl alcohol fiber, an aramid fiber, and a rayon fiber.

When a composite fiber cord is employed, the composite fiber cord is preferably composed of a combination of a high Young's modulus fiber and a low Young's modulus fiber.

For example, it is especially preferable to employ, among those fibers listed above, one obtained by combining the nylon 6 fiber or the nylon 66 fiber with the polyethylene naphthalate fiber or the polyolefin ketone fiber. The nylon 6 fiber and the nylon 66 fiber are excellent particularly in adhesion properties, while the polyethylene naphthalate fiber and the polyolefin ketone fiber have high Young's modulus, and thus effective in reducing the road noises of the intermediate frequency. Accordingly, the belt cover layer constituted of such combination provides a high durability in addition to the expected effect of reducing the road noises of the present invention.

In the present invention, the belt cover layer only needs to cover at least the edges of the belt layers. The form of the belt cover layer may be an edge cover that covers only the edges of the belt layers, or a full cover that covers the entire area of the belt layers. The belt cover layer also may employ a combination of both the edge cover and the full cover.

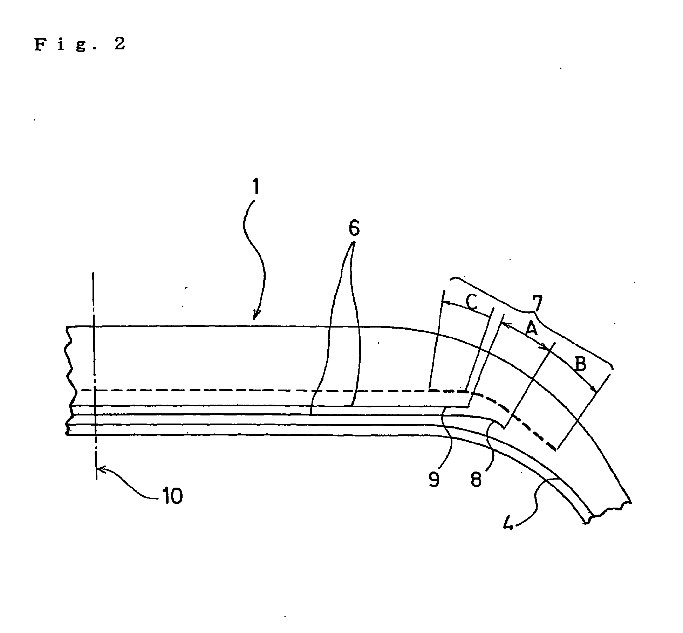

Fig. 2 is a schematic enlarged view of a vicinity of the belt edge portion. In Fig. 2, the portion A indicates a region between an edge of a belt layer having the minimum width and an edge of a belt layer having the maximum width, among the belt 6 constituted of the multiple layers. The belt cover layer needs to cover at least this edge region A. As long as the belt cover layer covers the edge region A, the belt cover layer may have any form of the edge cover and the full cover.

In both cases of the edge cover and the full cover, it is preferable that the end position of the belt cover layer 7 within a region B extending outward for 0 to 30 mm in the tire width direction from the edge position of the belt layer having the maximum width. The end position of the belt cover layer 7 preferably protrudes outward for at least not less than 3 mm but not more than 30 mm in the tire width direction from the edge position of the belt layer having the maximum width, and more preferably protrudes for not less than 5 mm but not more than 30 mm. If the end position of the belt cover layer 7 is caused to protrude for not less than 3 mm from the edge position of the belt layer having the maximum width, the effect of reducing the road noises can be further increased. Even if the length of protrusion caused to exceed 30 mm, the effect of reducing the road noises is almost saturated, so that the materials are only wasted. Accordingly, it is reasonable that the length of protrusion should be set at approximately 30 mm at the maximum.

In addition, in the case of using the edge cover, it is preferable that the inner end position of the belt cover layer 7 be within a region C extending inward for not less than 5 mm in the tire width direction from the edge position of the belt layer having the minimum width. This arrangement makes it possible to achieve a favorable effect of reducing the road noises in addition to the effect of preventing separation in the edges of belt layers. The practical limit of the length of the inner end position of the edge cover is 30 mm from the edge position of the belt layer having the maximum width.

In the case of using the full cover, the belt cover layer extends, as indicated by the thin dashed line, beyond a center 10 in the tire width direction to reach the opposite side.

### EXAMPLES

### Examples 1 to 4, Comparative Examples 1 to 3, and Conventional Example 1

Eight types of pneumatic radial tires (Examples 1 to 4, Comparative Examples 1 to 3, and Conventional Example 1) each having a tire size of 225/60R16 and the tire structure shown in Fig. 1 were prepared in accordance with specifications described below.

The belt layers were formed in a two-layer structure. Belt cords employed respectively in Examples, Comparative Examples, and Conventional Example were those shown in Tables 1 and 2, and the end count of each belt cord was 35 ends.

In addition, the organic fiber cords shown in Table 1 were used for the belt cover layers, as edge covers, of the respective tires. The weight of the cords used per tire and the covering width were set respectively at 30 g and 29 mm, that is, made the same in Examples, Comparative Examples, and Conventional Examples. To be specific, the region A was set to have a width of 5 mm; the length of protrusion of the region B was set at 12 mm; and the length of insertion of the region C was set at 12 mm.

Each of the tires was evaluated by the method of measuring the Young's modulus (GPa) of an organic fiber cord and the methods of evaluating the anti-road noise performance and the tire durability, as described below.

The results of evaluation are shown in Tables 1 and 2, from which it can be seen that the pneumatic radial tires according to the present invention are excellent in both the anti-road noise performance and the tire durability in a well-balanced manner.

(1) Young' s modulus (GPa) between Tensile Loads of 10 N to 99 N of Organic Fiber Cord:
Each tire was disassembled, and the organic fiber cord was sampled. The cord diameter measurement and the tensile test were performed on the sample, so that a stress-deformation curve was drawn. The point on the curve at a tensile load of 10N and the point on the curve at a tensile load of 99N were connected by a straight line. Accordingly, the Young's modulus (GPa) was obtained by finding the slope of the straight line.
   The measurement was performed on 20 cords, and the average value of the measured values was determined as the Young's modulus (GPa) of the organic fiber cord.

(2) Anti-Road Noise Performance:
Each of the tires prepared for evaluation was fitted onto a rim having a rim size of 16 × 7JJ, and then, was inflated to an air pressure of 210 kPa and caused to run at a speed of 60 km/hour. The sound pressure level was measured on each of the tires of Examples, Comparative Examples, and Conventional Example by use of a microphone attached at a position near the window in the driver's seat.
   The measurement was performed in such a manner that the reciprocal of each measured value was taken as the criteria for the evaluation. The results of evaluation are indicated by indices where the result of the tire of Conventional Example 1 is taken as an index of 100. The larger the index is, the more favorable the tire is in the anti-road noise performance.

(3) Tire Durability Performance:
Each of the tires prepared for evaluation was fitted onto a rim having a rim size of 16 × 7JJ, and then, was subjected to dry heat to be degraded for 14 days at an oxygen pressure of 350 kPa, and at a temperature of 70°C. After the dry heat degradation, the oxygen filled in the tire was replaced with air, and the air pressure was set at 170 kPa. Then, the tire was caused to run at a speed of 60 km/hour while the load (=3.5±1.1 kN) and the slip angle (=0±3°) were sinusoidally varied (at 0.03 Hz).

The running test was continuously performed on the tire until the tire failed. The results of the evaluation are indicated by indices where the running distance of the tire of Conventional Example 1 until failure was taken as an index of 100. The larger the index is, the more favorable the tire is in the tire durability performance.

**[Table 1]**

| | Conventional Example 1 | Example 1 | Example 2 | Example 3 |
|---|---|---|---|---|
| Belt Cord Structure | Steel | Steel | Steel | Steel |
| | 1×3×0.28HT | 2+1×0.28HT | 2+1×0.28HT | 2+1×0.28HT |
| Organic Fiber Cord of Belt Cover Layer | 66 Nylon 940T | PET 1100T | Aramid 1100T (one piece) | POK 1100T (two pieces) |
| | (two pieces) | (two pieces) | 66 Nylon 940T (one piece) | |
| | 1×2 structure twist | 1×2 structure twist | 1×2 structure twist | 1×2 structure twist |
| Young' s modulus of Organic Fiber Cord (GPa) | 3.5 | 5.0 | 8.0 | 10.0 |
| Anti-Road Noise Performance | 100 | 110 | 115 | 117 |
| Tire Durability Performance | 100 | 105 | 104 | 103 |
| Remarks | - | A good balance between the anti-road noise performance and the tire durability was achieved. | | |
| | | | | |

| | | | | |
|---|---|---|---|---|
| (Note) 1) "HT" means a high tensile cords, and "0.28HT" means that each single cord is a high tensile cord having a diameter of 0.28 mm. 2) "T" means a unit decitex (dtex). 3) "PET" means a polyethylene terephthalate fiber. 4) "POK" means a polyolefin ketone fiber. | | | | |

**[Table 2]**

| | Example 4 | Comparative Example 1 | Comparative Example 2 | Comparative Example 3 |
|---|---|---|---|---|
| Belt Cord Structure | Steel | Steel | Steel | Steel |
| | 2+1×0.28HT | 1×3×0.28HT | 2+1×0.28HT | 2+1×0.28HT |
| Organic Fiber Cord of Belt Cover Layer | POK 1100T (two pieces) | Aramid 1100T (one piece) | 66 Nylon 940T (two pieces) | Aramid 1100T (two |
| | 66 Nylon 940T (one piece) | 66 Nylon 940T (one piece) | | pieces) |
| | 1×2 structure twist | 1×2 structure twist | 1×2 structure twist | 1×2 structure twist |
| Young's modulus of Organic Fiber Cord | 8.0 | 8.5 | 3.5 | 20.0 |
| (GPa) | | | | |
| Anti-Road Noise Performance | 115 | 115 | 100 | 115 |
| Tire Durability Performance | 104 | 97 | 100 | 99 |
| Remarks | Good Balance Between | Belt Cord Separation | No Significant Effect was | Belt Cord Separation |
| | Anti-Road Noise | Occurred. | Observed. | Occurred. |
| | Performance and Tire | | | |
| | Durability was Achieved. | | | |

| | | | | |
|---|---|---|---|---|
| (Note) 1) The same as those in Table 1. | | | | |

## Claims

1. A pneumatic radial tire comprising:
at least two belt layers (6) each composed of a steel cord and disposed on an outer periphery of a carcass layer (4); and
a belt cover layer (7) obtained by winding an organic fiber cord in a tire circumferential direction and disposed to cover at least an edge portion of the belt layers (6), wherein
each of the belt layers (6) is composed of the steel cord with a (2+1) twist structure, and
the belt cover layer (7) is formed of a high Young's modulus organic fiber cord with Young's modulus of 4.5 to 18.0 GPa between tensile loads of 10 N to 99 N.

2. The pneumatic radial tire according to claim 1, wherein the high Young's modulus organic fiber cord is a cord made of any one of a polyethylene naphthalate fiber and a polyolefin ketone fiber.

3. The pneumatic radial tire according to claim 1, wherein the high Young's modulus organic fiber cord is a composite fiber cord made of at least two selected from the group consisting of a nylon 6 fiber, a nylon 66 fiber, a polyethylene terephthalate fiber, a polyethylene naphthalate fiber, polyolefin ketone fiber, a polyvinyl alcohol fiber, an aramid fiber, and a rayon fiber.

4. The pneumatic radial tire according to any one of claims 1 to 3, wherein
core wires of the steel cord with the (2+1) twist structure each are not twisted at all, or soft-twisted at a twist pitch of not less than 20 mm, and
a sheath wire thereof is twisted at a twist pitch of 10 to 30 mm.

5. The pneumatic radial tire according to claim 4, wherein diameters of the core wires and the sheath wire are 0.1 to 0.4 mm.

6. The pneumatic radial tire according to any one of claims 1 to 5, wherein a length (B) for which an outer end position, in a tire width direction, of the belt cover layer (7) protrudes from a corresponding edge position of a belt layer (8) having a maximum width among the belt layers (6) is not less than 3 mm but not more than 30 mm.

7. The pneumatic radial tire according to any one of claims 1 to 6, wherein
the belt cover layer (7) is an edge cover, and an inner end position, in the tire width direction, of the belt cover layer (7) is located at a position displaced inward in the tire width direction for not less than 5 mm from an edge position of a belt layer (9) having a minimum width among the belt layers (6).

## Patentansprüche

1. Pneumatischer Radialreifen, der folgendes umfasst:
mindestens zwei Gürtelschichten (6), die jeweils aus einem Stahlseil zusammengesetzt sind und an der äußeren Peripherie einer Karkassschicht (4) angeordnet sind; und
eine Gürteldeckschicht (7), die durch Winden eines organischen Faserseils in einer Reifenumfangsrichtung erhältlich ist und die zur Bedeckung mindestens eines Randteils der Gürtelschichten (6) angeordnet ist, worin
jede der Gürtelschichten (6) aus einem Stahlseil mit einer (2+1)-Twiststruktur zusammengesetzt ist und
die Gürteldeckschicht (7) aus einem Hoch-Youngs-Modul organischen Faserseil mit einem Young's-Modul von 4,5 bis 18,0 GPa zwischen Zuglasten von 10 N bis 99 N gebildet ist.

2. Pneumatischer Radialreifen gemäß Anspruch 1, worin das Hoch-Young's-Modul organische Faserseil ein Seil ist, das aus mindestens einer Polyethylennaphthalat-Faser und/oder einer Polyolefinketon-Faser hergestellt ist.

3. Pneumatischer Radialreifen gemäß Anspruch 1, worin das Hoch-Young's-Modul organische Faserseil ein Komposit-Faserseil ist, das aus mindestens zwei Fasern hergestellt ist, die ausgewählt sind aus einer Nylon-6-Faser, einer Nylon-66-Faser, einer Polyethylenterephthalat-Faser, einer
Polyethylennaphthalat-Faser, Polyolefinketon-Fasern, einer Polyvinylalkohol-Faser, einer Aramid-Faser und einer Rayon-Faser.

4. Pneumatischer Radialreifen gemäß mindestens einem der vorhergehenden Ansprüche 1 bis 3, worin Kerndrähte des Stahlseils mit der (2+1)-Twiststruktur jeweils überhaupt nicht verdreht sind oder mit einer Windungshöhe von nicht weniger als 20 mm leicht verdreht sind und deren Ummantelungsdraht mit einer Windungshöhe von 10 bis 30 mm verdreht ist.

5. Pneumatischer Radialreifen gemäß Anspruch 4, worin die Durchmesser der Kerndrähte und des Ummantelungsdrahts 0,1 bis 0,4 mm sind.

6. Pneumatischer Radialreifen gemäß mindestens einem der vorhergehenden Ansprüche 1 bis 5, worin eine Länge (B), die sich von einer äußeren Endlage in einer Reifenbreitenrichtung der Gürteldeckschicht (7) zu einer entsprechenden Randlage der Gürtelschicht (8) mit einer maximalen Breite der Gürtelschichten (6) erstreckt, nicht geringer als 3 mm jedoch nicht mehr als 30 mm ist.

7. Pneumatischer Radialreifen gemäß mindestens einem der vorhergehenden Ansprüche 1 bis 6, worin die Gürteldeckschicht (7) eine Randbedeckung ist, und an einer inneren Endlage in der Reifenbreitenrichtung der Gürteldeckschicht (7) an einer Position lokalisiert ist, die nach innen in der Reifenbreitenrichtung um nicht weniger als 5 mm von einer Randlage einer Gürtelschicht (9), die eine minimale Breite unter den Gürtelschichten (6) aufweist, versetzt ist.

## Revendications

1. Bandage radial pneumatique comprenant:
au moins deux couches de ceinture (6) chacune constituée d'une corde en acier et disposée sur une périphérie extérieure d'une couche de carcasse (4); et
une couche de recouvrement de ceinture (7) obtenue en enroulant une corde de fibres organiques dans une direction circonférentielle du bandage et disposée pour couvrir au moins une portion de bord des couches de ceinture (6), où
chacune des couches de ceinture (6) est constituée de la corde en acier avec une structure de torsion (2+1), et
la couche de recouvrement de ceinture (7) est réalisée à partir d'une corde de fibres organiques d'un module de Young élevé avec un module de Young de 4,5 à 18,0 GPa entre les charges de traction de 10 N à 99 N.

2. Bandage radial pneumatique selon la revendication 1, dans lequel la corde en fibres organiques d'un module de Young élevé est une corde réalisée en une quelconque parmi une fibre de polyéthylène naphtalate et une fibre de polyoléfine cétone.

3. Bandage radial pneumatique selon la revendication 1, dans lequel la corde en fibres organiques d'un module de Young élevé est une corde en fibres composites réalisée en au moins deux sélectionnées dans le groupe consistant en une fibre de nylon 6, une fibre de nylon 66, une fibre de polyéthylène térephtalate, une fibre de polyéthylène naphtalate, une fibre de polyoléfine cétone, une fibre de polyvinyl alcool, une fibre d'aramide et une fibre de rayonne.

4. Bandage radial pneumatique selon l'une quelconque des revendications 1 à 3, dans lequel les fils de noyau de la corde en acier avec la structure de torsion de (2+1) ne sont nullement tordus ou sont tordus légèrement selon un pas de torsion non inférieur à 20 mm, et
un fil de gainage de ceux-ci est tendu selon un pas de torsion de 10 à 30 mm.

5. Bandage radial pneumatique selon la revendication 4, dans lequel les diamètres des fils de noyau et du fil de gaine sont de 0,1 à 0,4 mm.

6. Bandage radial pneumatique selon l'une quelconque des revendications 1 à 5, dans lequel une longueur (B) selon laquelle une position d'extrémité extérieure, dans le sans de la largeur du bandage, de la couche de recouvrement de ceinture (7) fait saillie d'une position de bord correspondante d'une couche de ceinture (8) ayant une largeur maximale parmi les couches de ceinture (6) n'est pas inférieure à 3 mm mais n'est pas supérieure à 30 mm.

7. Bandage radial pneumatique selon l'une quelconque des revendications 1 à 6, dans lequel la couche de recouvrement de ceinture (7) est un recouvrement de bord, et une position d'extrémité intérieure, dans le sens de la largeur du bandage, de la couche de recouvrement de ceinture (7) se situe à une position déplacée vers l'intérieur dans le sens de la largeur du bandage selon non moins que 5 mm d'une position de bord d'une couche de ceinture (9) ayant une largeur minimum parmi les couches de ceinture (6).
